# EUROPÄISCHE PATENTSCHRIFT

(11) **EP 1 738 963 B1**
(45) Veröffentlichungstag und Bekanntmachung des Hinweises auf die Patenterteilung: **27.05.2009**
(21) Anmeldenummer: 06012596.0
(22) Anmeldetag: 20.06.2006
(51) Int. Cl.: B60R 13/08, B62D 25/20, B62D 29/04, B62D 35/02, B32B 5/26

(54) **Unterbodenverkleidung aus Kunststoff für ein Fahrzeug**
Vehicle underbody plate made of plastic
Habillage de bas de caisse de véhicule en matière plastique

(30) Priorität: 30.06.2005 DE 102005030913
(43) Veröffentlichungstag der Anmeldung: 03.01.2007
(73) Patentinhaber: Dr. Ing. h.c. F. Porsche Aktiengesellschaft, 70435 Stuttgart (DE); Ranger S.p.A, 20048 Carate Brianza MI (IT)
(72) Erfinder: Hölzel, Steffen, 71254 Ditzingen (DE); Schmid, Markus, 71297 Moensheim (DE); Reiche, Rudolf, 71287 Weissach (DE); Giardini, Marco Pietro, 20043 Arcore (MI) (IT); Motta, Giovanni, 20040 Briosco (MI) (IT)

(56) Entgegenhaltungen:
- US-A- 5 992 926
- US-A1- 2002 050 413
- US-A1- 2004 247 856
- US-B1- 6 287 678

## Beschreibung

Die Erfindung betrifft eine Unterbodenverkleidung aus Kunststoff für ein Fahrzeug.

Unterbodenverkleidungen dienen der aerodynamischen Verkleidung sowie des Schutzes der Unterbodenstruktur von Fahrzeugen. Insbesondere Sportfahrzeuge, die hohe Endgeschwindigkeiten erreichen, profitieren von einer möglichst ebenen Unterbodenverkleidung. Auf die Unterbodenverkleidung wirken sowohl aerodynamische Flächenlasten als auch Schlagbeanspruchungen (z.B. beim Überfahren von Schneehindernissen, Wasserdurchfahrt, Aufsetzen bei Rampenüberfahrt). Damit sind Unterbodenverkleidungen überwiegend auf Biegung beansprucht, müssen jedoch auch eine ausreichende Schlagzähigkeit aufweisen.

Bei bekannten Seriensportwagen werden Unterbodenverkleidungen aus kompakten glasfaserverstärkten Thermoplast verwendet, z.B. aus langfaserverstärkten Thermoplasten (LFT) oder glasmattenverstärkten Thermoplasten (GMT), die im Pressverfahren oder im Spritzgießverfahren verarbeitet werden. Diese Herstellungsverfahren ermöglichen für großflächige Bauteile minimale Bauteildicken von ca. 1,8 mm bis 2,0 mm. Mit den eingesetzten Werkstoffen ergibt sich damit ein minimales Flächengewicht von etwa 2100g pro m². Das Gesamtgewicht einer derartig aufgebauten Unterbodenverkleidung in einem Sportwagen beträgt bis zu 8 kg. Derartige Unterbodenverkleidungen zeichnen sich durch eine relativ hohe Biegesteifigkeit und eine gute Schlagzähigkeit auf; sie weisen jedoch ein beträchtliches Gewicht auf.

Aus US 2002/050413 A1 ist eine Unterbodenverkleidung nach dem Oberbegriff des Anspruchs 1 bekannt.

Aufgabe der Erfindung ist es, eine Unterbodenverkleidung so weiterzubilden, dass sie bei gleich bleibender Biegesteifigkeit und Schlagzähigkeit ein signifikant geringeres Flächengewicht und somit ein deutlich reduziertes Gesamtgewicht aufweist. Des weiteren soll die Unterbodenverkleidung aus Recyclinggründen aus nur einer oder zwei Werkstoffgruppen bestehen und zudem kostengünstig herstellbar sein.

Erfindungsgemäß wird diese Aufgabe durch die Merkmale der Ansprüche 1 gelöst.

Die mit der Erfindung hauptsächlich erzielten Vorteile sind darin zu sehen, dass durch den sandwichartigen Aufbau der Unterbodenverkleidung mit einer leichten Kernschicht und zwei steifen schlagzähen Deckschichten aus polypropylenfaserverstärktem Polypropylen eine besonders leichtgewichtige Unterbodenverkleidung geschaffen wird, die ihre Biegesteifigkeit und Schlagzähigkeit überwiegend aus den dünnwandigen Deckschichten bezieht. Je nach Materialpaarung der einzelnen Schichten lassen sich Gewichtseinsparungen zwischen 35 % und 55 % erzielen.

Bei einer ersten Ausführungsform der Erfindung besteht die leichte Kernschicht aus Polypropylenschaum. Da sämtliche Schichten bei dieser Variante nur aus einer Werkstoffgruppe bestehen, wird das Recycling der Unterbodenverkleidung wesentlich erleichtert.

Bei einer zweiten Ausführungsform besteht die Kernschicht aus einem leichten, unkonsolidierten glasmattenverstärkten Thermoplast mit hohem Luftanteil. Die einzelnen Schichten der Unterbodenverkleidung lassen sich in einfacher Weise thermisch miteinander verbinden, vorzugsweise verschweißen. Ein Verklebungsprozess, wie bei üblichen Sandwichelementen, ist somit nicht erforderlich. Im Bereich des Bauteilrandes und an den Krafteinleitungspunkten (Befestigungspunkten) ist die Unterbodenverkleidung auf ca. 1,0 mm bis 1,5 mm Dicke kompaktiert. Die konsolidierten Ränder schließen das Sandwich und verhindern somit das Eindringen von Verschmutzung und Feuchtigkeit. Im Bereich der Krafteinleitungen minimiert die Konsolidierung das heckstoffbedingte Kriechen und sichert so einen langfristigen Kraftschluss.

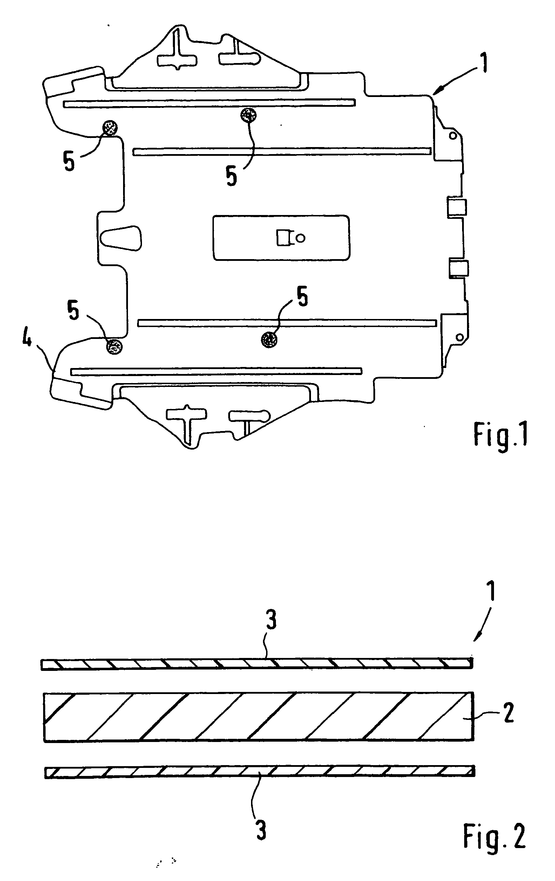

Ausführungsbeispiele der Erfindung sind in den Zeichnungen dargestellt und werden im folgenden näher erläutert. Es zeigt
- Fig. 1: eine Draufsicht auf eine Unterbodenverkleidung eines Fahrzeuges und
- Fig. 2: einen Schnitt durch die sandwichartige Unterbodenverkleidung, wobei die einzelnen Schichten in Explosionsdarstellung gezeigt sind.

Eine ein- oder mehrteilig ausgebildete Unterbodenverkleidung 1 dient als aerodynamische Verkleidung und als Schutz für die Unterbodenstruktur eines Fahrzeuges und ist mittels nicht näher dargestellter lösbarer Befestigungselemente am angrenzenden darüberliegenden Fahrzeugaufbau in Lage gehalten.

Erfindungsgemäß besitzt die sandwichartig ausgebildete Unterbodenverkleidung 1 eine leichte Kernschicht 2, die vorzugsweise beidseitig mit einer dünnwandigen Deckschicht 3 versehen ist. Im Vergleich zu unkonsolidierten GMT soll die neuartige Unterbodenverkleidung ihre Bauteileigenschaften überwiegend aus den Deckschichten 3 beziehen, nicht allein aus der Kernschicht 2. Daher sind ein möglichst leichter Kernwerkstoff sowie dünne, leichtgewichtige, feste, steife und extrem schlagzähe und abrasionsbeständige Deckschichten 3 notwendig. Glas- oder kohlenstofffaserverstärkte Deckschichten 3 eignen sich aufgrund der hohen minimalen Flächengewichte sowie ihrer geringen Schlagzähigkeit und Abrosionsbeständigkeit nicht als Deckschichten. Unverstärkte Polymerfolien besitzen dagegen keine ausreichend hohe Steifigkeit und Festigkeit, um das Leichtbaupotential eines Sandwichelementes optimal zu nutzen.

Polypropylenfaserverstärktes Polypropylen ist als Deckschicht-Werkstoff optimal geeignet. Es besitzt eine hohe Steifigkeit und Festigkeit, eine extrem gute Schlagenergieaufnahme sowie eine geringe Dichte. Zudem sind Foliendicken ab 0,15 mm auf dem Markt erhältlich.

Als Kernwerkstoff eignen sich leichte Kerne auf Polypropylenbasis, die die Deckschichten ausreichend unterstützen, z.B. Polypropylenschaum.

Die beiden steifen und schlagzähen Deckschichten 3 sind mit der Kernschicht 2 thermisch verbunden, beispielsweise durch Schweißen. Gemäß einer ersten Ausführungsform ist die Kernschicht 2 aus Polypropylenschaum gefertigt, wobei der Polypropylenschaum eine Dichte von 70 bis 150 kg pro m³ aufweist. Die beiden Deckschichten weisen eine Dicke zwischen 0,15 mm und 0,5 mm auf, vorzugsweise 0,30 mm. Die Gesamtdicke der Unterbodenverkleidung beträgt im Sandwichbereich etwa 3,5 mm bis 5 mm. Am Bauteilrand 4 und an den Krafteinleitungspunkten 5 wird das Sandwich auf ca. 1,0 mm bis 1,5 mm Dicke kompaktiert. Die realisierbaren Flächengewichte betragen damit 800g bis 1400g pro m² und führen zu Gewichtseinsparungen zwischen 30 % und 60 %.

Eine derart aufgebaute Unterbodenverkleidung 1 wird wie folgt gefertigt: Die drei Schichten (zwei Deckschichten 3 und die Kernschicht 2) werden entweder im Schaumextrusions-Prozess direkt aufeinander laminiert oder aber erst kurz vor dem Pressprozess assembliert. Das Sandwichpaket wird (ggf. in einem Spannrahmen eingespannt) in einer Aufheizstation (z.B. Umluftofen oder Infrarot-Ofen) bis auf die Verarbeitungstemperatur aufgeheizt und anschließend in einer Presse umgeformt sowie abgekühlt. Dieser Umformprozess ist als Stempelumformverfahren zur Formgebung endlos faserverstärkter Thermoplaste bekannt.

Die thermische Prozessführung und die Verwendung gleichartiger Werkstoffe ermöglicht es, die Deckschichten 3 mit dem Kernwerkstoff zu verschweißen und nicht - wie bei Sandwichelementen sonst üblich - zu verkleben. Dies spart einerseits den Verklebungsprozess ein, andererseits erleichtert es das spätere werkstoffliche Recycling.

Eine zweite Ausführungsform der Unterbodenverkleidung 1 unterscheidet sich von der ersten Variante dadurch, dass die auf Polypropylenbasis hergestellte Kernschicht 2 aus leichtem unkonsolidiertem glasmattenverstärktem Thermoplast mit hohem Luftanteil besteht, wobei die Kernschicht 2 ein Flächengewicht von 800g bis 1000g pro m² aufweist. Die beiden Deckschichten 3 sind bei der zweiten Ausführungsform ebenfalls aus polypropylenfaserverstärkten Polypropylen gefertigt und weisen jeweils eine Dicke von etwa 0,15 mm auf. Die Gesamtdicke der Sandwichelemente beträgt dabei 3,5 mm bis 5 mm. Die realisierbaren Flächengewichte betragen damit 1100g bis 1400g pro m² und führen zu Gewichtseinsparungen zwischen 30 % und 50 %.

Bei der zweiten Variante werden die drei Schichten (zwei Deckschichten und die Kernschicht) entweder im GMT-Herstellungsprozess direkt aufeinander laminiert oder aber erst kurz vor dem Pressprozess assembliert. Das Sandwichpaket wird in einer Aufheizstation bis auf die Verarbeitungstemperatur aufgeheizt und anschließend in einer Presse umgeformt sowie abgekühlt. Dieser Umformprozess ist als Stempelumformverfahren zur Formgebung endlosfaserverstärkter Thermoplaste bekannt.

Bei beiden Ausführungsformen ist die Unterbodenverkleidung 1 umlaufend am Bauteilrand 4 und an den Krafteinleitungspunkten 5 (Befestigungspunkten) auf ca. 1,0 mm bis 1,5 mm Dicke kompaktiert. Ferner ist zur Aussteifung der Unterbodenverkleidung 1 im Bereich des Bauteilrandes 4 sowie der Befestigungspunkte 5 eine zum angrenzenden Fahrzeugaufbau hin gerichtete Abstellung vorgesehen.

## Patentansprüche

1. Unterbodenverkleidung aus Kunststoff für ein Fahrzeug, die lösbar am angrenzenden Fahrzeugaufbau befestigt ist, wobei die sandwichartig ausgebildete Unterbodenverkleidung (1) eine gewichtsmäßig leichte Kernschicht (2) aus Polypropylenschaum besitzt, **dadurch gekennzeichnet dass** die Kernschicht (2) beidseitig mit einer dünnwandigen, steifen und schlagzähen Deckschicht (3) aus polypropylenfaserverstärktem Polypropylen versehen ist, wobei die beiden Deckschichten (3) mit der Kernschicht (2) thermisch verbunden sind, dass die Dicke der beiden Deckschichten (3) jeweils zwischen 0,15 mm und 0,5 mm und die Gesamtdicke der Unterbodenverkleidung (1) 3,5 mm bis 5 mm beträgt und dass die Unterbodenverkleidung (1) ein Flächengewicht zwischen 800 und 1400 g pro m² aufweist.

2. Unterbodenverkleidung aus Kunststoff für ein Fahrzeug, die lösbar am angrenzenden Fahrzeugaufbau befestigt ist nach Anspruch 1, **dadurch gekennzeichnet, dass** die sandwichartig ausgebildete Unterbodenverkleidung (1) die gewichtsmäßig leichte Kernschicht (2) aus leichtem, unkonsolidierten glasmattenverstärkten Thermoplast mit hohem Luftanteil besitzt, die beidseitig mit einer dünnwandigen, steifen und schlagzähen Deckschicht (3) aus polypropylenfaserverstärktem Polypropylen versehen ist, wobei die beiden Deckschichten (3) mit der Kernschicht (2) thermisch verbunden sind.

3. Unterbodenverkleidung nach Anspruch 2, **dadurch gekennzeichnet, dass** die Dicke jeder Deckschicht (3) etwa 0,15 mm beträgt.

4. Unterbodenverkleidung nach Anspruch 2, **dadurch gekennzeichnet, dass** die Unterbodenverkleidung (1) ein Flächengewicht etwa zwischen 1100 bis 1400 g pro m² aufweist.

5. Unterbodenverkleidung nach einem oder mehreren der vorangegangenen Ansprüche, **dadurch gekennzeichnet, dass** die Unterbodenverkleidung (1) am Bauteilrand (4) und an den Krafteinleitungspunkten (5) (Befestigungspunkten) auf etwa 1,0 mm bis 1,5 mm Dicke kompaktiert ist. ,

6. Unterbodenverkleidung nach einem oder mehreren der vorangegangenen Ansprüche, **dadurch gekennzeichnet, dass** die Unterbodenverkleidung (1) im Bereich des Bauteilrandes (4) sowie der Befestigungspunkte (5) gegenüber der angrenzenden Kontur der Unterbodenverkleidung (1) zum Fahrzeugaufbau hin abgestellt oder abgekantet ist.

## Claims

1. Vehicle underbody panel made of plastic, which is detachably fastened to the adjacent vehicle body, the underbody panel (1) of a sandwich-like form having a lightweight core layer (2) made of polypropylene foam, **characterized in that** the core layer (2) is provided on both sides with a thin-walled, rigid and impact-resistant outer layer (3) made of polypropylene fibre reinforced polypropylene, the two outer layers (3) being thermally bonded to the core layer (2), **in that** the thickness of the two outer layers (3) is respectively between 0.15 mm and 0.5 mm and the overall thickness of the underbody panel (1) is 3.5 mm to 5 mm and **in that** the underbody panel (1) has a weight per unit area of between 800 and 1400 g per m².

2. Vehicle underbody panel made of plastic, which is detachably fastened to the adjacent vehicle body, according to Claim 1, **characterized in that** the underbody panel (1) of a sandwich-like form has the lightweight core layer (2) made of light, unconsolidated glass mat reinforced thermoplastic with a high air content, which is provided on both sides with a thin-walled, rigid and impact-resistant outer layer (3) of polypropylene fibre reinforced polypropylene, the two outer layers (3) being thermally bonded to the core layer (2).

3. Underbody panel according to Claim 2, **characterized in that** the thickness of each outer layer (3) is approximately 0.15 mm.

4. Underbody panel according to Claim 2, **characterized in that** the underbody panel (1) has a weight per unit area of approximately between 1100 and 1400 g per m².

5. Underbody panel according to one or more of the preceding claims, **characterized in that** the underbody panel (1) is compacted to approximately 1.0 mm to 1.5 mm at the periphery of the component (4) and at the points of force introduction (5) (fastening points).

6. Underbody panel according to one or more of the preceding claims, **characterized in that** the underbody panel (1) is flanged or bent off towards the vehicle body with respect to the adjacent contour of the underbody panel (1) in the region of the periphery of the component (4) and the fastening points (5).

## Revendications

1. Habillage en matière synthétique pour le plancher d'un véhicule, fixé de manière libérable à la structure adjacente du véhicule, l'habillage (1) de plancher configuré en sandwich possédant une couche d'âme (2) légère en mousse de polypropylène,
**caractérisé en ce que**
la couche d'âme (2) est dotée sur ses deux faces d'une mince couche de recouvrement (3) rigide et tenace aux chocs, en polypropylène renforcé de fibres de polypropylène, les deux couches de recouvrement (3) étant reliées thermiquement à la couche d'âme (2) de telle sorte que l'épaisseur des deux couches de recouvrement (3) soit respectivement de 0,15 mm et de 0,5 mm et que l'épaisseur totale de l'habillage (1) de plancher soit de 3,5 mm à 5 mm, et
**en ce que** l'habillage (1) de plancher présente un poids par unité de surface compris entre 800 et 1 400 g par m².

2. Habillage en matière synthétique pour le plancher d'un véhicule, fixé de manière libérable sur la structure adjacente du véhicule selon la revendication 1, **caractérisé en ce que** l'habillage (1) de plancher configuré en sandwich possède la couche d'âme (2) légère en thermoplastique léger, non consolidée et renforcée par un mat de verre, à haute teneur en air, dotée sur ses deux faces d'une couche de recouvrement (3) à paroi mince, rigide et tenace aux chocs, en polypropylène renforcé de fibres de polypropylène, les deux couches de recouvrement (3) étant reliées thermiquement à la couche d'âme (2).

3. Habillage de plancher selon la revendication 2, **caractérisé en ce que** l'épaisseur de chaque couche de recouvrement (3) est d'environ 0,15 mm.

4. Habillage de plancher selon la revendication 2, **caractérisé en ce que** l'habillage de plancher (1) présente un poids par unité de surface compris entre environ 1 100 et 1 400 g par m².

5. Habillage de plancher selon l'une ou plusieurs des revendications précédentes, **caractérisé en ce que** l'habillage de plancher (1) est compacté à une épaisseur d'environ 1,0 mm à 1,5 mm sur le bord (4) du composant et sur les points (5) d'application de force (points de fixation).

6. Habillage de plancher selon l'une ou plusieurs des revendications précédentes, **caractérisé en ce que** dans la zone occupée par le bord (4) et par les points de fixation (5) du composant, l'habillage de plancher (1) est décalé ou chanfreiné en direction de la structure du véhicule par rapport au contour adjacent de l'habillage de plancher (1).
